# EUROPEAN PATENT APPLICATION

(11) **EP 4 821 752 A1**
(43) Date of publication of application: **14.10.2026**
(21) Application number: 26170997.6
(22) Date of filing: 07.04.2026
(51) Int. Cl.: B60L 53/80

(54) **BATTERY CHARGING MANAGEMENT METHOD BASED ON SOC SETTINGS, AND BATTERY ENERGY STATION IMPLEMENTING THE SAME**

(30) Priority: 09.04.2025 TW 114113366
(71) Applicant: Kwang Yang Motor Co., Ltd., Kaohsiung City 80794 (TW)
(72) Inventor: WANG, Ching-Yuan, 11501 Taipei City (TW); LI, Hao-Wen, 11501 Taipei City (TW); HSU, Chi-Hui, 11501 Taipei City (TW)
(74) Representative: Stöckeler, Ferdinand

(57) **Abstract**

A battery charging management method based on SOC settings is adapted to be implemented by a battery energy station (100) that is configured to receive and charge a plurality of batteries (112). The method includes: providing a first battery SOC ratio dataset, where the first battery SOC ratio dataset records a first quantity ratio of the batteries (112) that are set at a first target SOC value in the battery energy station (100); using the battery energy station (100) to receive a specific battery; and when a proportion of the batteries (112) that are set at the first target SOC value in the battery energy station (100) has not reached the first quantity ratio of the batteries (112), setting a charging target value of the specific battery to the first target SOC value, and performing a charging operation on the specific battery according to the first target SOC value until the specific battery has the first target SOC value.

## Description

The disclosure relates to a battery charging management method and a battery energy station implementing the same, and more particularly to a battery charging management method based on state-of-charge (SOC) settings and a battery energy station implementing the same.

In recent years, with the rising consciousness of environmental protection and the significant advancement in electric vehicle technology, developing electric vehicles that use electric energy as a power source to replace conventional vehicles that are powered by fossil fuel has gradually become an important goal in the field of vehicles, which makes electric vehicles more and more popular. To increase the range of electric vehicles and to promote the willingness of using electric vehicles, numerous countries and cities have begun planning to set up charging stations and battery energy stations in public places. These facilities offer convenient access to charging or battery exchanging services for electric cars and/or electric motorcycles, which makes the use of electric vehicles more convenient.

Generally, rechargeable batteries are one of the major costs for manufacturers, and the rechargeable batteries have life cycle limits. For some electric vehicles, such as an electric scooter, when the battery power is insufficient, when the rechargeable batteries differ significantly in terms of battery capacity, or when the life cycles respectively of the rechargeable batteries differ significantly, starting an electric vehicle using a combination of these rechargeable batteries may cause malfunctions in or reduce lifetimes of the electric vehicle and the rechargeable batteries.

Moreover, the high cost of batteries is a primary factor contributing to the high service fees of electric scooters. If different charging modes can be implemented based on user requirements, or if various suppliers are introduced into the electric vehicle ecosystem, the overall service fees for electric scooters may be reduced, thereby increasing user's willingness to adopt electric scooters.

Therefore, an object of the disclosure is to provide a battery charging management method based on state-of-charge (SOC) settings and a battery energy station implementing the same that can alleviate at least one of the drawbacks of the prior art.

According to an aspect of the disclosure, there is provided a battery charging management method based on SOC settings according to claim 1.

According to an aspect of the disclosure, there is provided a battery energy station according to claim 9.

Other features and advantages of the disclosure will become apparent in the following detailed description of the embodiment(s) with reference to the accompanying drawings. It is noted that various features may not be drawn to scale.
Figure 1 is a block diagram of a battery energy station according to an embodiment of the disclosure.
Figure 2 is a schematic view illustrating a battery energy station connected to a cloud server through a network according to an embodiment of the disclosure.
Figure 3 is a flow chart illustrating a battery charging management method based on SOC settings according to an embodiment of the disclosure.
Figure 4 is a flow chart illustrating the battery charging management method based on SOC settings according to another embodiment of the disclosure.
Figure 5 is a flow chart illustrating the battery charging management method based on SOC settings according to yet another embodiment of the disclosure.
Figure 6 is a flow chart illustrating the battery charging management method based on SOC settings according to still another embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

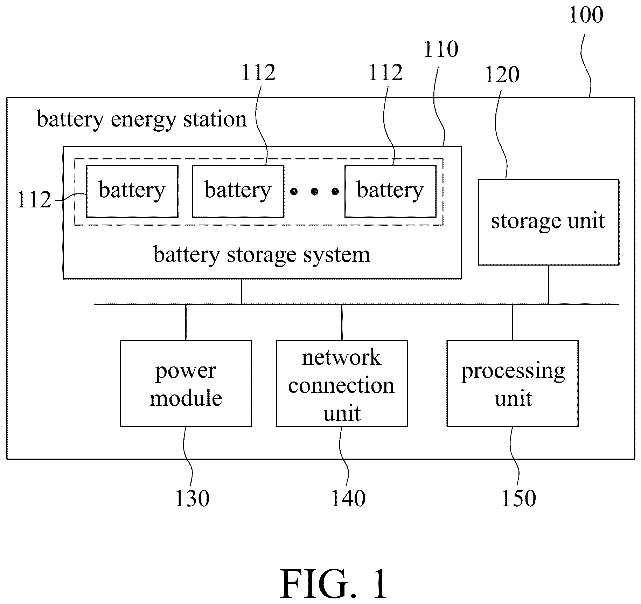

Referring to Figure 1, a battery energy station 100 according to an embodiment of the disclosure is provided. The battery energy station 100 according to the embodiment of the disclosure may be electronic equipment. As shown in Figure 1, the battery energy station 100 at least includes a battery storage system 110, a storage unit 120, a power module 130, a network connection unit 140, and a processing unit 150. The battery storage system 110 includes specific mechanisms (not shown) for receiving a plurality of batteries 112, and for selectively holding or releasing the batteries 112. The battery energy station 100 is configured to provide the batteries 112 for at least one electric device, such as an electric scooter or an electric car, to use. The storage unit 120 may store at least one battery state-of-charge (SOC) ratio dataset. The battery SOC ratio dataset may record a quantity ratio of the batteries 112 that are set at at least one target SOC value in the battery energy station 100. In other words, the battery SOC ratio dataset may define proportions of the batteries 112 with different SOC values in the battery energy station 100 after a charging operation. In one example, the battery SOC ratio dataset may define that in the battery energy station 100, a proportion of the batteries 112 with an SOC value of 70 is 40%, and a proportion of the batteries 112 with an SOC value of 80 is 60%. In another example, the battery SOC ratio dataset may define that in the battery energy station 100, a proportion of the batteries 112 with an SOC value of 70 is 30%, a proportion of the batteries 112 with an SOC value of 85 is 30%, and a proportion of the batteries 112 with an SOC value of 80 is 40%. In some embodiments, the storage unit 120 may store a first battery SOC ratio dataset that corresponds to a peak period, and a second battery SOC ratio dataset that corresponds to an off-peak period. The content defined in the first battery SOC ratio dataset and the second battery SOC ratio dataset may be different. The use of the battery SOC ratio dataset will be described later.

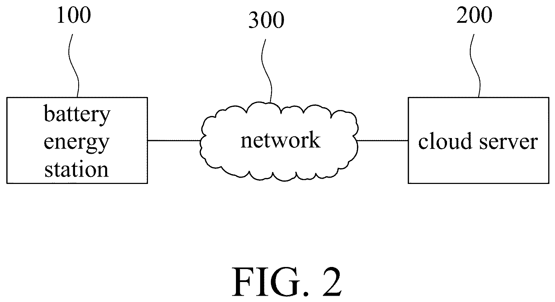

The power module 130 may be electrically connected to a power grid (not shown) for receiving a total electric current from the power grid, so as to supply electricity to the battery energy station 100, and to charge the batteries 112 based on signals from the processing unit 150. It should be noted that the battery storage system 110 may include charging modules respectively corresponding to the batteries 112, and each charging module has an upper current limit and/or a lower current limit for charging the corresponding battery 112. It should be noted that, in some embodiments, the power module 130 is configured to actively detect the total electric current supplied by the power grid to the battery energy station 100, and to send information related to the total electric current to the processing unit 150. As such, the processing unit 150 may control the power module 130 to, based on the information thus received, distribute the total electric current to the batteries 112 during charging of the batteries 112. The network connection unit 140 is configured to connect to a network 300 (see Figure 2), thus providing network connection capability to the battery energy station 100. In some embodiments, the network 300 may be, but is not limited to, one or more of a wired network, a telecommunications network, a wireless network (e.g., Wi-Fi), etc. The processing unit 150 is electrically connected to the battery storage system 110, the storage unit 120, the power module 130, and the network connection unit 140, and is configured to control hardware components and software of the battery energy station 100 to operate, and to perform a battery charging management method based on SOC settings according to embodiments of the disclosure. Details thereof will be described later.

In this embodiment, the network connection unit 140 may include one or more of a radio-frequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), the fourth generation (4G) or fifth generation (5G) of wireless mobile telecommunications technology, or the like. The processing unit 150 may be, but is not limited to, one or more of a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), a system on a chip (SoC), etc. Each charging module may be embodied as a battery charger. The storage unit 120 may be embodied using one or more computer-readable storage mediums such as hard disk drives, random access memory (RAM), read only memory (ROM), programmable ROM (PROM), flash memory, etc.

Referring to Figure 2, according to another embodiment of the disclosure, a battery energy station 100 connected to a cloud server 200 through the network 300 is provided. Similarly, the battery energy station 100 is electronic equipment that is configured to receive and store a plurality of batteries, and to provide one or more of the batteries for at least one electric device, such as an electric scooter or an electric car, to use. The battery energy station 100 may include components similar to the battery energy station 100 shown in Figure 1, and will not be described in further detail for the sake of brevity. The battery energy station 100 may be connected to the cloud server 200 through the network 300 (e.g., a wired network, a telecommunications network, or a wireless network such as Wi-Fi) using the network connection unit 140. It should be noted that, in some embodiments, the cloud server 200 may simultaneously manage other battery energy stations that are located at the same location or that are located at different locations. As described previously, the power module 130 of the battery energy station 100 is configured to actively detect the total electric current provided by the power grid to the battery energy station 100, and to send information related to the total electric current to the processing unit 150 of the battery energy station 100. In some embodiments, the cloud server 200 is configured to send information related to the total electric current to the battery energy station 100. In some embodiments, the cloud server 200 is configured to send information related to different time periods (e.g., a peak period, an off-peak period, etc.) to the battery energy station 100 through the network 300. The battery energy station 100 is able to manage battery changing based on the information thus received.

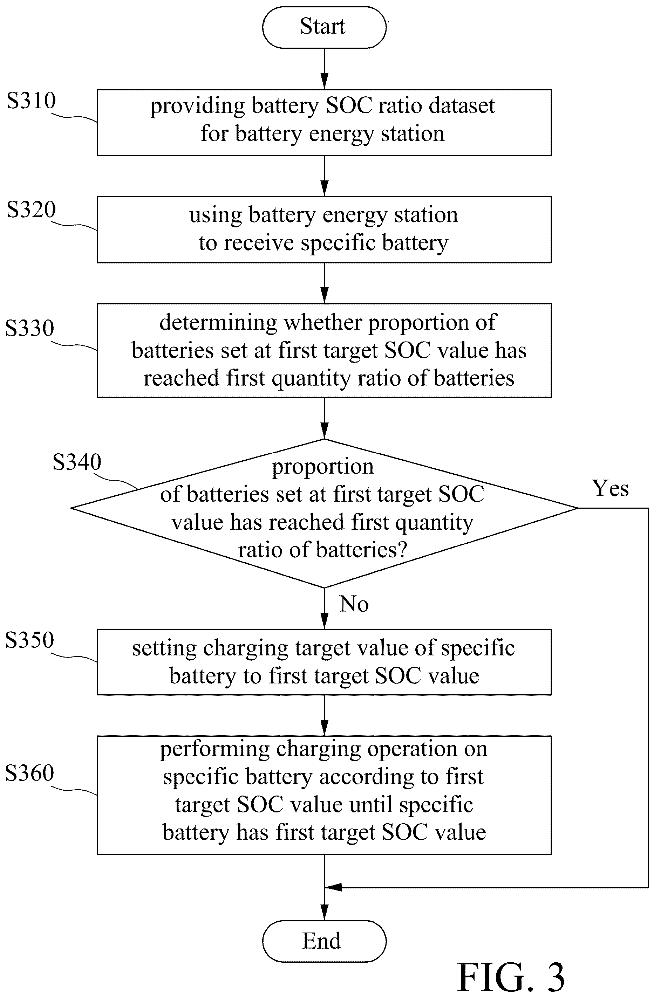

Referring to Figure 3, a battery charging management method based on SOC settings is provided according to an embodiment of the disclosure. The battery charging management method based on SOC settings is adapted to be implemented by electronic equipment that is configured to receive and charge a plurality of batteries 112, such as the battery energy station 100 as shown in Figure 1.

First, in step S310, a battery SOC ratio dataset for the battery energy station 100 is provided, where the battery SOC ratio dataset at least records a first quantity ratio of the batteries 112 that are set at a first target SOC value in the battery energy station 100. In some embodiments, the battery SOC ratio dataset may be provided to the battery energy station 100 by an administrator of the battery energy station 100 pre-storing the battery SOC ratio dataset into the storage unit 120. Then, in step S320, the battery energy station 100 receives a specific battery, and in step S330, the processing unit 150 determines whether a proportion of the batteries 112 that are set at the first target SOC value in the battery energy station 100 has reached the first quantity ratio of the batteries 112. When it is determined that the proportion of the batteries 112 that are set at the first target SOC value in the battery energy station 100 has reached the first quantity ratio of the batteries 112 (i.e., "Yes" in step S340), the flow of the method ends. When it is determined that the proportion of the batteries 112 that are set at the first target SOC value in the battery energy station 100 has not reached the first quantity ratio of the batteries 112 (i.e., "No" in step S340), then in step S350, the processing unit 150 sets a charging target value of the specific battery to the first target SOC value, and in step S360, the processing unit 150 controls the power module 130 to perform a charging operation on the specific battery according to the first target SOC value until the specific battery has the first target SOC value.

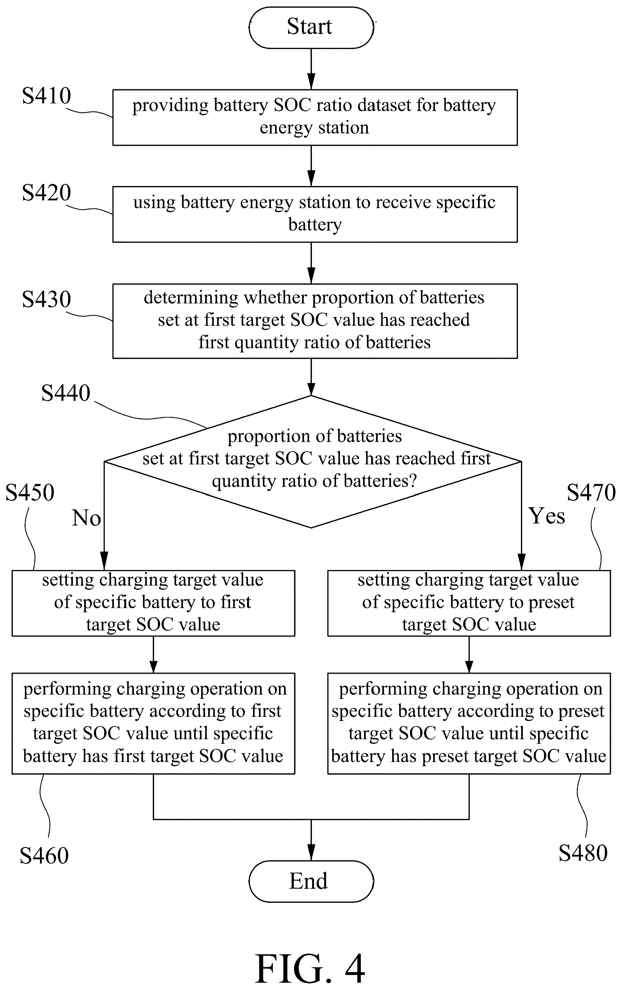

Referring to Figure 4, a battery charging management method based on SOC settings is provided according to another embodiment of the disclosure. The battery charging management method based on SOC settings in this embodiment is adapted to be implemented by electronic equipment that is configured to receive and charge a plurality of batteries 112, such as the battery energy station 100 as shown in Figure 1.

First, in step S410, a battery SOC ratio dataset for the battery energy station 100 is provided, where the battery SOC ratio dataset at least records a first quantity ratio of the batteries 112 that are set at a first target SOC value in the battery energy station 100. Then, in step S420, the battery energy station 100 receives a specific battery, and in step S430, the processing unit 150 determines whether a proportion of the batteries 112 that are set at the first target SOC value in the battery energy station 100 has reached the first quantity ratio of the batteries 112. When it is determined that the proportion of the batteries 112 that are set at the first target SOC value in the battery energy station 100 has not reached the first quantity ratio of the batteries 112 (i.e., "No" in step S440), then in step S450, the processing unit 150 sets a charging target value of the specific battery to the first target SOC value, and in step S460, the processing unit 150 controls the power module 130 to perform a charging operation on the specific battery according to the first target SOC value until the specific battery has the first target SOC value. When it is determined that the proportion of the batteries 112 that are set at the first target SOC value in the battery energy station 100 has reached the first quantity ratio of the batteries 112 (i.e., "Yes" in step S440), then in step S470, the processing unit 150 sets the charging target value of the specific battery to a preset target SOC value, and in step S480, the processing unit 150 controls the power module 130 to perform the charging operation on the specific battery according to the preset target SOC value until the specific battery has the preset target SOC value. It should be noted that, in some embodiments, each battery energy station 100 may have a corresponding preset target SOC value pre-stored in the storage unit 120 of the battery energy station 100.

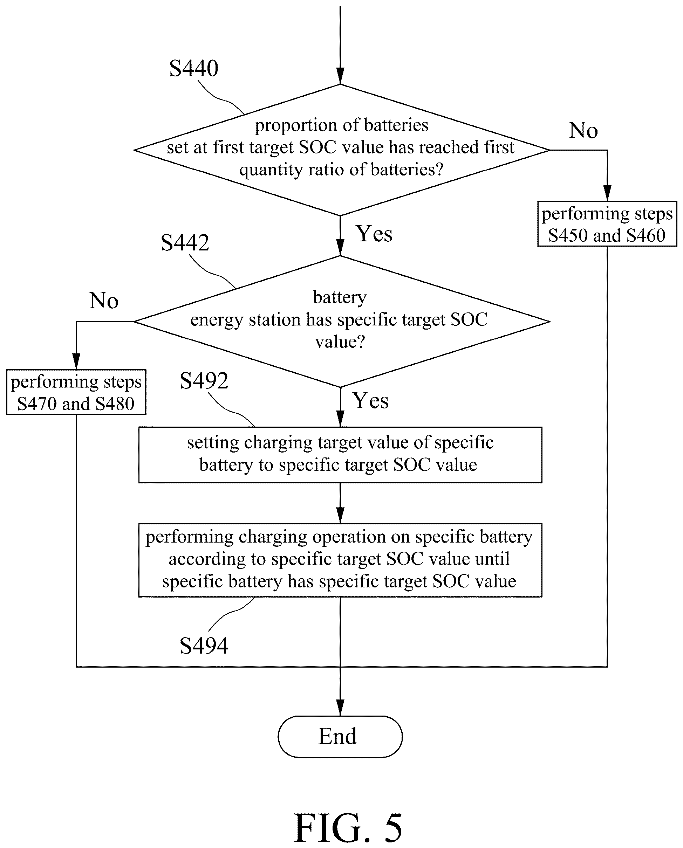

Referring to Figure 5, a battery charging management method based on SOC settings is provided according to yet another embodiment of the disclosure. The battery charging management method based on SOC settings in this embodiment is adapted to be implemented by electronic equipment that is configured to receive and charge a plurality of batteries 112, such as the battery energy station 100 as shown in Figure 1. It should be noted that, in some embodiments, the cloud server 200 (as shown in Figure 2) may instruct specific battery energy stations to maintain its batteries at specific SOC as needed.

In this embodiment, steps S410 to S430 and S450 to S480 are performed in a similar manner as described above with reference to Figure 4. When it is determined that the proportion of the batteries 112 that are set at the first target SOC value in the battery energy station 100 has not reached the first quantity ratio of the batteries 112 (i.e., "No" in step S440), steps S450 and S460 are performed. When it is determined that the proportion of the batteries 112 that are set at the first target SOC value in the battery energy station 100 has reached the first quantity ratio of the batteries 112 (i.e., "Yes" in step S440), then in step S442, the processing unit 150 determines whether the battery energy station 100 has a specific target SOC value. It should be noted that the battery energy station 100 may receive the specific target SOC value from the cloud server 200 through the network 300 (as shown in Figure 2). When it is determined that the battery energy station 100 does not have the specific target SOC value (i.e., "No" in step S442), steps S470 and S480 are performed. When it is determined that the battery energy station 100 has the specific target SOC value (i.e., "Yes" in step S442), then in step S492, the processing unit 150 sets the charging target value of the specific battery to the specific target SOC value, and in step S494, the processing unit 150 controls the power module 130 to perform the charging operation on the specific battery according to the specific target SOC value until the specific battery has the specific target SOC value.

It should be noted that the embodiments of Figures 3, 4 and 5 are exemplified using only a single set of the target SOC value and its quantity ratio of the batteries. In some embodiments, the battery SOC ratio dataset may define multiple sets of target SOC values and their quantity ratios of the batteries. In some embodiments, when the proportion of the batteries 112 that are set at the first target SOC value in the battery energy station 100 has reached the first quantity ratio of the batteries 112, the processing unit 150 determines whether a proportion of the batteries 112 that are set at a second target SOC value in the battery energy station 100 has reached a second quantity ratio of the batteries 112. When it is determined that the proportion of the batteries 112 that are set at the second target SOC value in the battery energy station 100 has not reached the second quantity ratio of the batteries 112, the processing unit 150 sets the charging target value of the specific battery to the second target SOC value, and controls the power module 130 to perform the charging operation on the specific battery according to the second target SOC value until the specific battery has the second target SOC value. When it is determined that the proportion of the batteries 112 that are set at the second target SOC value in the battery energy station 100 has reached the second quantity ratio of the batteries 112, the processing unit 150 sets the charging target value of the specific battery to a preset target SOC value, and controls the power module 130 to perform the charging operation on the specific battery according to the preset target SOC value until the specific battery has the preset target SOC value.

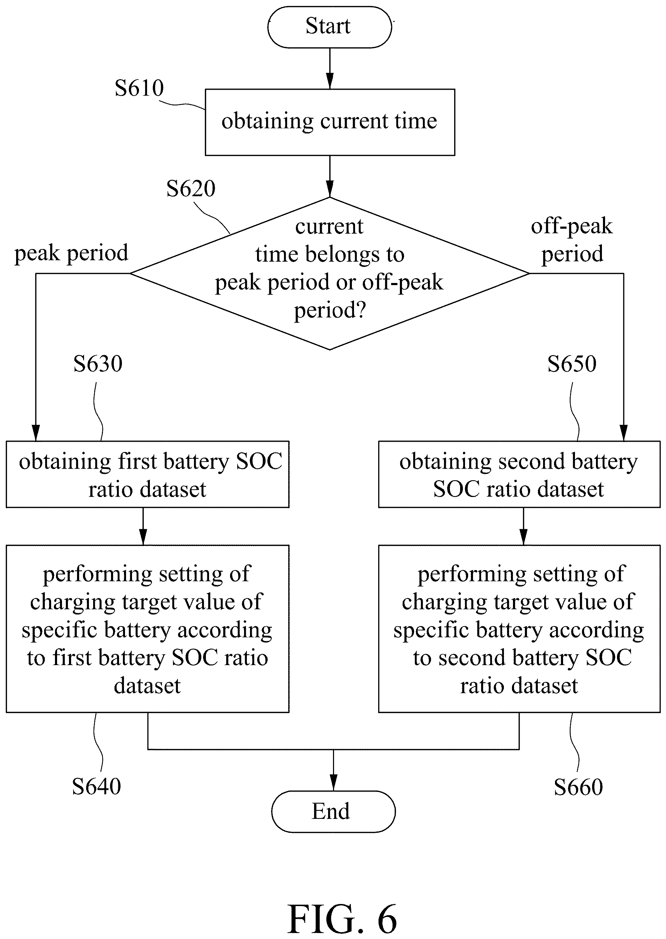

Referring to Figure 6, a battery charging management method based on SOC settings is provided according to still another embodiment of the disclosure. The battery charging management method based on SOC settings in this embodiment is adapted to be implemented by electronic equipment that is configured to receive and charge a plurality of batteries 112, such as the battery energy station 100 as shown in Figure 1.

First, in step S610, the battery energy station 100 obtains a current time, and in step S620, the processing unit 150 determines whether the current time belongs to a peak period or an off-peak period. It should be noted that the peak period and the off-peak period may be predefined in the battery energy station 100, or may be received from the cloud server 200 through the network 300 (as shown in Figure 2). It should be further noted that the storage unit 120 may store a first battery SOC ratio dataset that corresponds to the peak period, and a second battery SOC ratio dataset that corresponds to the off-peak period. The content defined in the first battery SOC ratio dataset and the second battery SOC ratio dataset may be different. The processing unit 150 may select the first battery SOC ratio dataset or the second battery SOC ratio dataset based on a result thus determined for a subsequent setting of the charging target value of the specific battery. When it is determined that the current time belongs to the peak period, then in step S630, the battery energy station 100 obtains the first battery SOC ratio dataset that corresponds to the peak period, and in step S640, the battery energy station 100 performs a setting of the charging target value of the specific battery according to the first battery SOC ratio dataset. When it is determined that the current time belongs to the off-peak period, then in step S650, the battery energy station 100 obtains the second battery SOC ratio dataset that corresponds to the off-peak period, and in step S660, the battery energy station 100 performs a setting of the charging target value of the specific battery according to the second battery SOC ratio dataset.

In summary, by virtue of the battery charging management method based on SOC settings and the battery energy station 100 according to the disclosure, the proportions of the batteries 112 at different target SOC values may be used for setting batteries and performing charging management, and further, charging parameters may be adjusted to extend a service life of the batteries 112 and to meet the battery needs of users.

The method of the disclosure, or a portion thereof, may be implemented as a set of program codes. The set of program codes may be stored in a physical storage medium, such as a floppy disk, a compact disk, a hard disk, or any machine readable (e.g., computer readable) storage medium, or may be implemented as a computer program product that is not limited in its physical form. When the program codes are executed by a machine (e.g., a computer), the machine turns into a device for implementing the method of the disclosure. The program codes may also be transmitted by a transmission medium, such as one or more wires, cables, optical fibers, or any other transmission means, and when the program codes are received, loaded, and executed by a machine (e.g., a computer), such machine turns into a device for implementing the method of the disclosure. When the method is implemented by a general purpose processor, the program codes cause the processor to operate as a specific device having a function similar to an application specific integrated circuit (ASIC).

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A battery charging management method based on state-of-charge (SOC) settings, adapted to be implemented by a battery energy station (100) that is configured to receive and charge a plurality of batteries (112), the method being **characterized by** steps of:
providing a first battery SOC ratio dataset for the battery energy station (100), where the first battery SOC ratio dataset records a first quantity ratio of the plurality of batteries (112) that are set at a first target SOC value in the battery energy station (100);
using the battery energy station (100) to receive a specific battery;
determining whether a proportion of the plurality of batteries (112) that are set at the first target SOC value in the battery energy station (100) has reached the first quantity ratio of the plurality of batteries (112); and
in response to determining that the proportion of the plurality of batteries (112) that are set at the first target SOC value in the battery energy station (100) has not reached the first quantity ratio of the plurality of batteries (112), setting a charging target value of the specific battery to the first target SOC value, and performing a charging operation on the specific battery according to the first target SOC value until the specific battery has the first target SOC value.

2. The battery charging management method based on SOC settings as claimed in claim 1, further comprising steps of, in response to determining that the proportion of the plurality of batteries (112) that are set at the first target SOC value in the battery energy station (100) has reached the first quantity ratio of the plurality of batteries (112), setting the charging target value of the specific battery to a preset target SOC value, and performing the charging operation on the specific battery according to the preset target SOC value until the specific battery has the preset target SOC value.

3. The battery charging management method based on SOC settings as claimed in claim 2, further comprising steps of:
determining whether the battery energy station (100) has a specific target SOC value; and
in response to determining that the battery energy station (100) does not have the specific target SOC value and that the proportion of the plurality of batteries (112) that are set at the first target SOC value in the battery energy station (100) has reached the first quantity ratio of the plurality of batteries (112), setting the charging target value of the specific battery to the preset target SOC value.

4. The battery charging management method based on SOC settings as claimed in claim 3, further comprising a step of, in response to determining that the battery energy station (100) has the specific target SOC value and that the proportion of the plurality of batteries (112) that are set at the first target SOC value in the battery energy station (100) has reached the first quantity ratio of the plurality of batteries (112), setting the charging target value of the specific battery to the specific target SOC value.

5. The battery charging management method based on SOC settings as claimed in any one of claims 3 and 4, further comprising a step of using the battery energy station (100) to receive the specific target SOC value from a cloud server (200) through a network (300).

6. The battery charging management method based on SOC settings as claimed in claim 1, wherein the first battery SOC ratio dataset further records a second quantity ratio of the plurality of batteries (112) that are set at a second target SOC value in the battery energy station (100), and wherein the method further comprises steps of:
in response to determining that the proportion of the plurality of batteries (112) that are set at the first target SOC value in the battery energy station (100) has reached the first quantity ratio of the plurality of batteries (112), determining whether a proportion of the plurality of batteries (112) that are set at the second target SOC value in the battery energy station (100) has reached the second quantity ratio of the plurality of batteries (112); and
in response to determining that the proportion of the plurality of batteries (112) that are set at the second target SOC value in the battery energy station (100) has not reached the second quantity ratio of the plurality of batteries (112), setting the charging target value of the specific battery to the second target SOC value, and performing the charging operation on the specific battery according to the second target SOC value until the specific battery has the second target SOC value.

7. The battery charging management method based on SOC settings as claimed in claim 6, further comprising steps of, in response to determining that the proportion of the plurality of batteries (112) that are set at the second target SOC value in the battery energy station (100) has reached the second quantity ratio of the plurality of batteries (112), setting the charging target value of the specific battery to a preset target SOC value, and performing the charging operation on the specific battery according to the preset target SOC value until the specific battery has the preset target SOC value.

8. The battery charging management method based on SOC settings as claimed in any one of claims 1 to 7, further comprising steps of:
providing a second battery SOC ratio dataset for the battery energy station (100), where the first battery SOC ratio dataset corresponds to a peak period, and the second battery SOC ratio dataset corresponds to an off-peak period; and
using the battery energy station (100) to obtain a current time, determining whether the current time belongs to the peak period or the off-peak period, and selecting one of the first battery SOC ratio dataset and the second battery SOC ratio dataset based on a result thus determined for a subsequent setting of the charging target value of the specific battery.

9. A battery energy station (100), **characterized by**:
a storage unit (120) storing a first battery SOC ratio dataset, where the first battery SOC ratio dataset records a first quantity ratio of batteries (112) that are set at a first target SOC value in said battery energy station (100);
a battery storage system (110) configured to receive the batteries (112);
a power module (130) configured to charge the batteries (112); and
a processing unit (150) electrically connected to said battery storage system (110) and said power module (130), and configured to
receive a specific battery,
determine whether a proportion of the batteries (112) that are set at the first target SOC value in said battery energy station (100) has reached the first quantity ratio of the batteries (112),
in response to determining that the proportion of the batteries (112) that are set at the first target SOC value in said battery energy station (100) has not reached the first quantity ratio of the batteries (112), set a charging target value of the specific battery to the first target SOC value, and perform a charging operation on the specific battery according to the first target SOC value until the specific battery has the first target SOC value.

10. The battery energy station (100) as claimed in claim 9, wherein said processing unit (150) is further configured to, in response to determining that the proportion of the batteries (112) that are set at the first target SOC value in said battery energy station (100) has reached the first quantity ratio of the batteries (112), set the charging target value of the specific battery to a preset target SOC value, and perform the charging operation on the specific battery according to the preset target SOC value until the specific battery has the preset target SOC value.
